# FASCICULE DE BREVET EUROPEEN

(11) **EP 1 939 964 B1**
(45) Date de publication et mention de la délivrance du brevet: **23.06.2010**
(21) Numéro de dépôt: 07124110.3
(22) Date de dépôt: 27.12.2007
(51) Int. Cl.: H01M 8/02, H01M 8/24

(54) **Boîtier pour pile à combustible miniature**
Gehäuse für Mini-Brennstoffzelle
Case for miniature fuel cell

(30) Priorité: 27.12.2006 FR 0655968
(43) Date de publication de la demande: 02.07.2008
(73) Titulaire: ST MICROELECTRONICS S.A., 92120 Montrouge (FR)
(72) Inventeur: Bedu, Yann, 37230 Fondettes (FR); Serre, Christophe, 37540 Saint Cyr sur Loire (FR)
(74) Mandataire: de Beaumont, Michel

(56) Documents cités:
- EP-A- 1 296 400
- EP-A- 1 471 590
- US-A1- 2004 146 772
- US-A1- 2004 161 650
- US-A1- 2006 134 470

## Description

### Domaine de l'invention

La présente invention concerne un boîtier pour pile à combustible miniature.

### Exposé de l'art antérieur

Les piles à combustible miniatures sont notamment prévues pour équiper de nombreux équipements électroniques portables tels que des ordinateurs, des téléphones, des lecteurs de musique, etc.

Deux technologies de piles à combustible ont vu le jour récemment pour des applications de faible énergie : les piles dites "PEMFC" utilisant des membranes échangeuses de protons et un combustible à base d'hydrogène (hydrogène, hydrures métalliques, etc.) envoyé à l'anode, et les piles dites "DMFC" de structure similaire mais utilisant du méthanol liquide comme combustible envoyé à l'anode.

Indépendamment de la source de combustible dont l'une des fonctions est de permettre d'engendrer des ions H⁺ et des électrons (courant électrique) au contact d'un gaz contenant ou engendrant in situ de l'oxygène, une technologie dérivée de la microélectronique a été développée pour constituer le coeur de la pile, technologie utilisable notamment avec l'hydrogène.

Des cellules connues sont réalisées à partir d'un substrat de silicium traversé de micro-canaux dans lesquels transite de l'hydrogène gazeux. Ce substrat porte des couches minces successives comportant une couche de catalyseur, une membrane électrolytique, une couche de diffusion ainsi que deux électrodes, l'une à proximité du substrat et l'autre au-dessus de l'ensemble des couches minces.

On réalise ainsi une cellule ou un ensemble de cellules miniatures par exemple sous forme de plaquettes parallélépipédiques de faible épaisseur appelées ici éléments de pile à combustible. Pour obtenir des caractéristiques de pile souhaitées, on doit assembler plusieurs éléments de pile. Chaque élément de pile comporte sur sa face avant au moins deux plots de connexion électrique apparents, le plus et le moins de la pile. Généralement, sans pour autant que cela soit nécessaire, l'arrivée du fluide ou du mélange de fluides notamment gazeux contenant ou engendrant de l'oxygène (notamment l'air ambiant) se fait sur l'une des (grandes) faces de l'élément et l'arrivée du fluide ou mélange de fluides, notamment gazeux contenant ou engendrant de l'hydrogène se fait sur l'autre (grande) face de l'élément.

Un boîtier de pile à combustible relativement complexe est décrit dans US-A-2004/0146772.

### Résumé

A ce jour il n'existe pas de boîtier simple contenant plusieurs éléments de pile à combustible ayant une forme adaptée pour remplacer les piles ou batteries que l'on utilise pour des usages nomades, notamment dans les micro-ordinateurs ou les téléphones portables. La présente invention vise à réaliser un boîtier améliorant au moins certaines caractéristiques de l'art antérieur.

Pour atteindre tout ou partie de ces objets ainsi que d'autres, on prévoit un boîtier pour pile à combustible comportant un plateau supérieur comprenant une pluralité d'ouvertures, la face avant d'un élément de pile étant destinée à être reçue sous chaque ouverture de façon à l'obstruer, chaque élément de pile comportant un premier plot et un second plot de connexion, chaque ouverture étant munie d'au moins une traverse reliant deux côtés de l'ouverture, cette traverse comportant au moins une portion de piste conductrice dont une première extrémité est reliée à un plot d'un premier élément de pile et dont une deuxième extrémité est reliée à un plot d'un élément de pile voisin.

Selon un mode de réalisation de la présente invention, le boîtier définit un espace clos du côté des faces arrière des éléments de pile et comporte un orifice d'accès pour alimenter en fluide combustible ledit espace.

Selon un mode de réalisation de la présente invention, les plots et les extrémités des portions de piste conductrice sont reliés par une colle conductrice.

Selon un mode de réalisation de la présente invention, le plateau supérieur est constitué de deux plaques de matériau plastique entre lesquelles les pistes conductrices sont prises en sandwich.

Un mode de réalisation de la présente invention prévoit une pile à combustible comportant un boîtier tel que ci-dessus et une pluralité d'éléments de piles reliés en série par lesdites pistes conductrices.

Selon un mode de réalisation de la présente invention, chaque élément de pile est collé sous l'ouverture correspondante.

Selon un mode de réalisation de la présente invention, la pile comporte au moins une entretoise de maintien sous au moins l'un des éléments de pile.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est une vue schématique en coupe d'un élément de pile à combustible ;
la figure 2 est une vue schématique en coupe d'un boîtier pour pile à combustible selon un mode de réalisation de la présente invention ; et
la figure 3 est une vue de dessous du plateau supérieur du boîtier vu en coupe sur la figure 2.

### Description détaillée

Par souci de clarté, les mêmes éléments ont été désignés par de mêmes références sur les différentes figures et, de plus, comme cela est habituel, notamment dans la représentation des circuits intégrés, les diverses figures ne sont pas tracées à l'échelle.

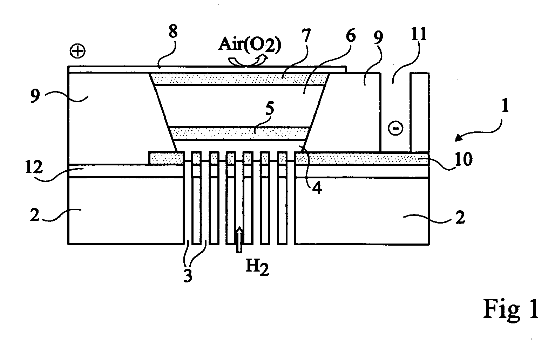

La figure 1 est une vue en coupe schématique d'un exemple de cellule de pile à combustible 1. Sur un substrat en silicium 2 sont déposées successivement une couche isolante 12, une couche d'anode 10 et une couche isolante 9 dans laquelle se trouve un logement à l'intérieur duquel on retrouve successivement un support de catalyseur 4, une couche de catalyseur 5, une couche d'électrolyte 6, une couche de catalyseur 7, et une électrode de cathode 8. Une ouverture 11 est réalisée dans la couche isolante 9 de manière à réaliser un contact électrique sur l'anode 10. La couche de silicium 2, la couche isolante 12 et la couche d'anode 10 sont traversées par des micro-canaux 3 qui atteignent le support de catalyseur, ces micro-canaux étant destinés à alimenter le coeur de la cellule en combustible. La face supérieure de cet élément, au niveau de la cathode 8 est perméable au fluide contenant de l'oxygène, en général de l'air. Pour son utilisation, cet élément sera de préférence disposé pour permettre l'arrivée de combustible sur sa face inférieure, par exemple de l'hydrogène, et de comburant sur sa face supérieure, par exemple de l'air et/ou de l'oxygène.

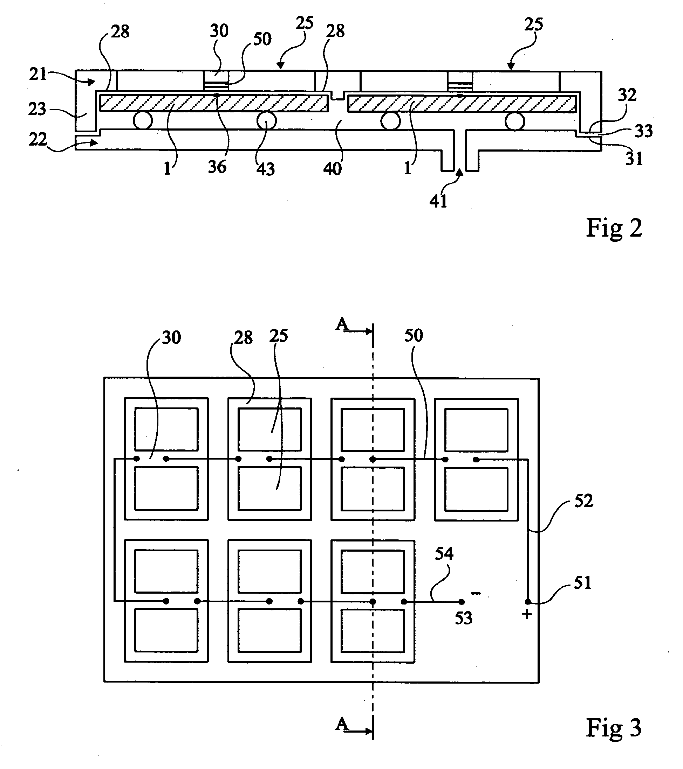

Les figures 2 et 3 illustrent un boîtier selon un exemple de réalisation de l'invention, la figure 2 étant une vue en coupe agrandie selon le plan A-A de la figure 3. Le boîtier comporte un plateau supérieur 21, un plateau inférieur 22 et un rebord périphérique 23 solidaire du plateau supérieur et/ou du plateau inférieur. Le plateau supérieur 21 comporte une pluralité d'ouvertures 25, ces ouvertures étant de forme rectangulaire dans le mode de réalisation représenté, mais pouvant avoir toute autre forme géométrique adaptée.

Chaque ouverture 25 est divisée par une traverse 30 qui relie deux côtés opposés de l'ouverture 25. Sous le contour de chacune des ouvertures 25 est reçu un élément de pile 1. L'élément de pile vient s'appuyer sur un rebord 28 formé dans le plateau 21 autour de l'ouverture 25. Afin d'améliorer la tenue mécanique et l'étanchéité de l'ensemble, on prévoira de préférence au niveau du rebord 28 de solidariser l'élément de pile 1 et le plateau supérieur par une colle ou tout autre élément de fixation adéquat. Le logement dégagé entre les plateaux supérieur 21 et inférieur 22 est de hauteur supérieure à l'épaisseur de chaque élément de pile 1.

Le plateau inférieur 22 vient se loger sous le rebord périphérique 23 du plateau supérieur 21, par exemple au niveau d'appuis 31 sur le plateau inférieur et 32 sur le rebord périphérique 23.

Entre la surface supérieure du plateau inférieur 22 et la surface inférieure du plateau supérieur 21 est délimité un volume 40 qui doit être suffisant pour incorporer les éléments de pile 1 en laissant un espace suffisant pour introduire et stocker de l'hydrogène ou un fluide susceptible d'engendrer de l'hydrogène (ou un combustible en général) qui est introduit dans ce volume 40 par l'intermédiaire d'un orifice d'accès 41 réalisé dans le présent exemple au travers du plateau inférieur 22. Afin d'assurer la rigidité mécanique et l'étanchéité nécessaire au fonctionnement du dispositif de pile à combustible, on assure la solidarisation du plateau supérieur 21 et de son rebord 23 avec le plateau inférieur 22 à l'aide par exemple d'une colle ou tout élément similaire 33 entre les appuis 31 et 32. Pour une meilleure tenue mécanique du boîtier, on pourra par exemple prévoir des entretoises 43 sous les éléments de pile.

La figure 3 illustre de manière schématique une interconnexion possible des différents éléments de pile montés à l'intérieur du boîtier dans laquelle tous les éléments de pile sont montés en série. A titre d'exemple, on considérera que les éléments de pile sont des plaquettes ayant une épaisseur de l'ordre du millimètre et des dimensions de l'ordre du centimètre, par exemple une largeur comprise entre 0,5 et 1 cm et une longueur comprise entre 1 et 2 cm, ces éléments étant carrés ou rectangulaires, de préférence rectangulaires. On considère également que chaque élément de pile comprend un plot sensiblement central 36 et un plot disposé le long de l'un de ses bords, non représenté dans les figures. L'un de ces plots correspond à la borne positive de la pile et l'autre à la borne négative. Bien entendu, d'autres configurations pourront être adoptées, chaque élément de pile pourra comprendre un ou plusieurs plots positifs et un ou plusieurs plots négatifs.

Selon un aspect de l'invention, des portions de piste conductrice sont formées dans le plateau supérieur 21, des parties au moins de certaines au moins de ces portions de piste conductrice s'étendant sur les traverses 30 pour venir faire contact avec des plots disposés de façon sensiblement centrale sur les éléments de pile. Sur la figure 3, on a représenté le plateau supérieur 21 vu de dessous, c'est-à-dire que l'on voit les rebords 28 dans lesquels viendront se placer chacun des éléments de pile. Des éléments de piste conductrice 50 sont disposés, en s'étendant partiellement sur les traverses 30 entre le plot négatif d'une pile et le plot positif d'une pile et le plot positif d'une pile adjacente.

Une borne positive 51 de la pile est connectée à un premier élément de pile par un conducteur 52 et une borne négative 53 de la pile est connectée à l'élément de pile extrême par une portion de piste 54.

L'homme de l'art saura adapter le mode de réalisation ci-dessus à des cas dans lesquels les éléments de piles sont interconnectés selon diverses connexions série/parallèle.

Comme on le verra ci-après, divers moyens peuvent être prévus pour former les éléments de piste 52. Par exemple, ils sont formés sur la face inférieure de la plaquette, les parties ne devant pas être en contact avec des bornes d'un élément de pile étant revêtues d'un isolant. De nombreux autres modes de réalisation sont néanmoins possibles comme on le verra ci-après. Le contact entre l'extrémité d'une portion de piste et le plot correspondant d'un élément de pile placé en dessous sera de préférence assuré par une goutte de colle conductrice. Ainsi selon un avantage d'un mode de réalisation de la présente invention, les contacts sont pris directement avec les bornes de chaque élément de pile, sans qu'il soit nécessaire de souder des fils et/ou rubans intermédiaires. On pourra utiliser tout autre procédé de connexion adapté (soudure, microboule, microbosse...)

On a représenté un espace libre dans le plateau supérieur du boîtier à l'emplacement où se trouvent les bornes 51 et 53. L'homme de l'art notera que l'on peut disposer à cet emplacement tout composant électronique destiné à la gestion des éléments de pile, par exemple pour assurer les fonctions de commutation, de limitation de courant, de limitation de tension, ou autres.

Différents procédés de réalisation de ce plateau supérieur sont possibles. Selon un mode de réalisation, le plateau supérieur comportera au moins deux couches d'un même matériau ou de matériaux différents entre lesquels sera pris en sandwich un réseau de pistes conductrices approprié. On réalisera ensuite deux demi-ouvertures au travers de la couche supérieure (par exemple par fraisage) séparées par la traverse correspondante, tandis que l'on réalisera l'ouverture complète correspondante au travers de la couche inférieure en mettant ainsi à nu la portion de connexion électrique disposée sous la traverse. Il est bien entendu possible de prévoir un système d'interconnexion multi-couches (par exemple n pistes conductrices et n+1 couches isolantes respectivement alternées) avec des ouvertures comportant ou non des traverses selon le dessin choisi pour le passage des pistes.

Les différentes réalisations décrites ci-dessus sont susceptibles de diverses variantes et modifications qui apparaîtront à l'homme de l'art. Le plateau supérieur pourra être en un matériau quelconque de préférence isolant ou recouvert d'une couche isolante notamment en matière plastique ou en époxy, d'épaisseur et/ou de rigidité suffisante pour l'usage auquel il est destiné et sera de préférence imperméable ou très peu perméable. La forme de ce plateau sera par exemple celle d'une carte de crédit. On pourra pour obtenir l'ensemble de ces propriétés, notamment lorsque le critère d'imperméabilité requis est de niveau élevé, prévoir une pluralité de feuilles empilées les unes sur les autres et rendues de préférence solidaires entre elles, chaque feuille remplissant l'une au moins des fonctions requises.

La traverse prévue dans chaque ouverture permet de préférence d'assurer une rigidification du boîtier tout en constituant le support d'une piste conductrice discontinue, par exemple en cuivre, aluminium, or, platine, etc., chaque piste étant située sous cette traverse qui la protège ainsi.

Les ouvertures seront de dimensions inférieures à celles de l'élément de pile à combustible celui-ci étant inséré dans le boîtier de préférence sous ledit plateau supérieur, de manière à venir de préférence obstruer totalement ladite ouverture, la face de l'élément recevant le gaz contenant de l'oxygène étant de préférence orientée vers l'extérieur du boîtier, pour être en particulier au contact de l'air ambiant si celui-ci constitue le gaz contenant de l'oxygène utilisé par la pile. Un tel positionnement assure bien entendu l'étanchéité, en général nécessaire pour éviter le passage de l'autre fluide (par exemple le gaz contenant de l'hydrogène) qui alimente l'autre face de l'élément. Cette étanchéité peut être renforcée par différents éléments additionnels qui peuvent être utilisés seuls ou en combinaison :
- chaque ouverture peut être munie sur sa face inférieure d'une rainure de préférence disposée tout autour de l'ouverture, de largeur suffisante pour que l'élément de pile correspondant vienne ainsi s'appuyer sur cette rainure ;
- une colle (ou tout autre élément de solidarisation remplissant la même fonction) sera prévue de préférence tout autour de l'élément et/ou tout autour du bord de l'ouverture pour rendre solidaire et de préférence étanche selon le cahier des charges imposé, la jonction entre l'élément de pile et le plateau supérieur ;
- le fluide contenant ou engendrant de l'hydrogène sera de préférence maintenu sous pression au contact de la partie inférieure de l'élément de pile. Cette surpression en plaquant l'élément de pile contre le bord de son ouverture contribuera à l'amélioration de l'étanchéité entre les deux éléments.

D'une manière générale également, compte tenu de la présence de fluides contenant de l'oxygène et/ou de l'hydrogène à proximité ou dans le boîtier, il sera souvent utile, en particulier pour des raisons de sécurité, de choisir des matériaux antistatiques (notamment pour réaliser le plateau supérieur, les montants et/ou le plateau inférieur).

Le plateau inférieur sera généralement de forme semblable à celle du plateau supérieur et constitué du même matériau ou d'un des matériaux envisagés pour le plateau supérieur mais pourra éventuellement être constitué d'un autre matériau dans la mesure où le plateau inférieur n'a en règle générale pas la fonction d'isolant électrique que présente le plateau supérieur selon l'exemple de réalisation décrit.

## Revendications

1. Boîtier pour pile à combustible miniature comportant un plateau supérieur (21) comprenant une pluralité d'ouvertures (25), la face avant d'un élément de pile (1) étant destinée à être reçue sous chaque ouverture de façon à l'obstruer, **caractérisé en ce que** chaque élément de pile comporte un premier plot (36) et un second plot de connexion, chaque ouverture (25) étant munie d'au moins une traverse (30) reliant deux côtés de l'ouverture (25), cette traverse (30) comportant au moins une portion (50) de piste conductrice dont une première extrémité est reliée à un plot d'un premier élément de pile et dont une deuxième extrémité est reliée à un plot d'un élément de pile voisin.

2. Boîtier selon la revendication 1, dans lequel le boîtier définit un espace clos (40) du côté des faces arrière des éléments de pile et comporte un orifice d'accès (41) pour alimenter en fluide combustible ledit espace.

3. Boîtier selon la revendication 1, dans lequel les plots et les extrémités des portions de piste conductrice sont reliés par une colle conductrice.

4. Boîtier selon la revendication 1, dans lequel le plateau supérieur est constitué de deux plaques de matériau plastique entre lesquelles les pistes conductrices sont prises en sandwich.

5. Pile à combustible comportant un boîtier selon la revendication 1 et une pluralité d'éléments de piles (1) reliés en série par lesdites pistes conductrices.

6. Pile à combustible selon la revendication 5, dans laquelle chaque élément de pile (1) est collé sous l'ouverture (25) correspondante.

7. Pile selon la revendication 5, comportant au moins une entretoise (43) de maintien sous au moins l'un des éléments de pile.

## Claims

1. A package for a miniature fuel cell comprising an upper plate (21) comprising a plurality of openings (25), the front surface of a cell element (1) being intended to be received under each opening to close it, **characterized in that** each cell element comprises a first pad (36) and a second connection pad, each opening (25) being provided with at least one crossbar (30) connecting two sides of the opening (25), this crossbar (30) comprising at least a conductive track portion (50) having a first end connected to a pad of a first cell element and having a second end connected to a pad of a neighboring cell element.

2. The package of claim 1, wherein the package defines a closed space (40) on the side of the rear surfaces of the cell elements and comprises an access port (41) to feed said space with fuel fluid.

3. The package of claim 1, wherein the pads and the ends of the conductive track portions are connected by a conductive glue.

4. The package of claim 1, wherein the upper plate is formed of two wafers of a plastic material between which the conductive tracks are sandwiched.

5. A fuel cell comprising the package of claim 1 and a plurality of cell elements (1) series-connected by said conductive tracks.

6. The fuel cell of claim 5, wherein each cell element (1) is glued under the corresponding opening (25).

7. The cell of claim 5, comprising at least one holding spacer (43) under at least one of the cell elements.

## Patentansprüche

1. Ein Gehäuse für eine Mini-Brennstoffzelle, wobei das Gehäuse eine obere Platte (21) mit einer Vielzahl von Öffnungen (25) aufweist, wobei die vordere Oberfläche eines Zellenelements (1) zur Aufnahme unter jeder Öffnung vorgesehen ist, um diese zu schließen, **dadurch gekennzeichnet, dass** jedes Zellenelement einen ersten Anschluss (36) und einen zweiten Verbindungsanschluss aufweist, wobei jede Öffnung (25) mit mindestens einer Querstange (30) versehen ist, die zwei Seiten der Öffnung (25) verbindet, wobei diese Querstange (30) mindestens einen leitenden Bahnteil (50) aufweist, mit einem ersten Ende verbunden mit einem Anschluss eines ersten Zellenelements und mit einem zweiten Ende verbunden mit einem Anschluss eines benachbarten Zellenelements.

2. Gehäuse nach Anspruch 1, wobei das Gehäuse einen geschlossenen Raum (40) auf der Seite der hinteren Oberflächen der Zellenelemente definiert, und einen Zugangsanschluss (41) aufweist, um den erwähnten Raum mit Brennstofffluid zu versorgen.

3. Gehäuse nach Anspruch 1, wobei die Anschlüsse und die Enden der leitenden Bahnteile mit einem leitenden Kleber verbunden sind.

4. Gehäuse nach Anspruch 1, wobei die obere Platte aus zwei Wafern eines Kunststoffmaterials gebildet ist, zwischen denen die leitenden Bahnen sandwichartig angeordnet sind.

5. Eine Brennstoffzelle, die ein Gehäuse nach Anspruch 1 und eine Vielzahl von Zellenelementen 1, in Serie geschaltet durch die leitenden Bahnen, aufweist.

6. Brennstoffzelle nach Anspruch 5, wobei jedes Zellenelement (1) unter die entsprechende Öffnung (25) geklebt ist.

7. Brennstoffzelle nach Anspruch 5, wobei mindestens ein Halteabstandselement (43) unter mindestens einem der Zellenelemente vorgesehen ist.
